# EUROPEAN PATENT APPLICATION

(11) **EP 1 256 551 A1**
(43) Date of publication of application: **13.11.2002**
(21) Application number: 01902845.5
(22) Date of filing: 13.02.2001
(51) Int. Cl.: C02F 1/463, C02F 1/74, B01D 21/01

(54) **APPARATUS FOR PRODUCING COAGULANT AND WATER CLARIFICATION APPARATUS USING THE SAME**

(30) Priority: 18.02.2000 JP 2000041879
(71) Applicant: Matsuedoken Co., Ltd, Matsue-shi, Shimane 690-0826 (JP); Sawada, Yoshiyuki, Toyoura-gun, Yamaguchi 759-6314 (JP); Kanoh, Masamichi, Munakata-shi, Fukuoka 811-3425 (JP)
(72) Inventor: SAWADA, Yoshiyuki, Toyoura-cho, Toyoura-gun, Yamaguchi 759- (JP); KANOH, Masamichi, Munakata-shi, Fukuoka 811-3425 (JP)
(74) Representative: von Samson-Himmelstjerna, Friedrich R., Dipl.-Phys.
(86) International application number: JP0100989
(87) International publication number: WO01060751

(57) **Abstract**

Oxygen-dissolved water having an oxygen concentration from 20 to 50ppm prepared by a high-concentration oxygen water preparation unit (1) is supplied to Fe²⁺ generated by eluting Fe by a voltage applied to plate electrodes (6), thereby completely and rapidly oxidizing Fe²⁺ to Fe³⁺, which is more stable. As Fe³⁺ is stable, it hardly colors raw water as the water to be treated and does not adversely affect the human body. Therefore, Fe³⁺ is harmless if discharged without being consumed for coagulation.

## Description

### FIELD OF THE INVENTION

The present invention relates to an apparatus for producing coagulant which is added to water to be treated to coagulate impurities including organic and inorganic substances in the water as well as a water purification apparatus using the same.

### BACKGROUND OF THE INVENTION

Recently, water contamination in rivers, lakes, marshes, reservoirs, cisterns and the like has become significant, causing social problems. It has also become a public concern that a large amount of murky water generated by concentrated heavy rain on reclaimed land often damages various animal habitats in the areas where the water flew in. Impurities are dissolved in the water of such areas, including organic and inorganic substances, which adversely affect human health and the environment. A part of the impurities resides as suspended colloids, which are a cause of contamination.

A variety of methods have been proposed and put to practical use for removing impurities from contaminated water as water to be treated containing impurities. One known method is a chemical method in which chemicals are added as coagulant to the water to be treated, thereby coagulating impurities contained in the water to be treated. Coagulant is roughly classified into inorganic salts, organic high molecular compounds, coagulation auxiliaries, and others. In the inorganic salts that are often used, aluminum sulfate, basic aluminum chloride, ferric sulfate and ferric chloride are exemplified as typical ones.

Most of the conventional coagulant, however, has sulfate ions or chlorine ions, which are pointed out as the substances harmful to health and environment. In addition, the used coagulant, if residing in water or sludge, may probably damage the natural environment and have an adverse impact when using the water. Therefore, the coagulant to be used should be carefully selected.

Another known method is for removing heavy metal ions from the water solution, which is disclosed in Japanese Examined Patent Publication (Kokoku) S52-3340. According to the method of removing heavy metal ions, two electrodes having different potentials with both ends electrically wired are submerged in a water solution containing heavy metal ions. One electrode that has base potential is electrochemically dissolved, thereby coagulating and separating the heavy metal ions as water-insoluble compounds.

The principle on which the above method is based is as follows. The two kinds of electrodes having different potentials submerged in the water solution generate difference in potential between the electrodes. By short-circuiting both ends thereof, heavy metal ions as well as other positive and negative ions function as electrolytes, which causes electric current to flow from one electrode to the other electrode. Relative to the flow of the current, the electrode having base potential is eluted into the solution and bonds to OH ions to generate water-soluble hydroxides having particular properties. The hydroxides absorb various heavy metal ions mixed in the solution and make them water-insoluble compounds.

However, according to the method of removing heavy metal ions described in Japanese Examined Patent Publication (Kokoku) S52-3340 above, as the metal used for the electrode having base potential is eluted into the solution, the metal itself used for the electrode resides in the solution and is discharged with the solution unless the eluted metal is consumed for absorbing the heavy metal ions mixed in the solution.

Therefore, the metal used for the electrode should be carefully selected. For example, if aluminum is used for the electrode having base potential, the aluminum is eluted in the solution. Recently, aluminum is suspected of being relative to Alzheimer's disease and said to damage health. Furthermore, if metal is oxidized and stains the solution, the colored water solution is discharged and may pollute the environment.

In view of the above, an object of the present invention is to provide an apparatus for producing coagulant, which is harmless to human health and environment if discharged without being consumed for coagulation, as well as a water purification apparatus using the apparatus.

### DISCLOSURE OF THE INVENTION

The apparatus for producing coagulant of the present invention is the apparatus for producing coagulants by eluting metal ions from electrodes by electrolysis comprising an ionic reaction means, wherein the electrodes are mainly composed of Fe, and the apparatus has an oxidization means for oxidizing Fe²⁺ eluted from the electrodes to generate Fe³⁺ provided before the ionic reaction means..

By direct current flowing between electrodes, Fe is eluted from the electrodes by electrolysis to generate Fe²⁺ (ferrous ion) and Fe³⁺ (ferric ion). Fe²⁺ is easily oxidized as it is to become FeO and colored rusty. Thus, if Fe²⁺ is used as coagulant, the water to be treated is colored reddish brown. Accordingly, using an oxidization means, by exposing Fe²⁺ to oxygen, Fe²⁺ is rapidly and completely oxidized to become Fe³⁺, which is more stable and can be used as coagulant. As Fe³⁺ is stable, the treated water is hardly colored. Furthermore, since iron does not adversely affect the human body, Fe³⁺ is harmless if discharged without being consumed for coagulation. In addition, by using Fe, which is abundantly found in nature and cheap, production cost and running cost for the apparatus can be lowered. Moreover, since electrolysis of the iron of such an amount required for coagulation does not need high voltage, it is possible to use a solar battery as a power source, which makes the apparatus for producing coagulant of the present invention energy-saving.

It is preferable that the oxidation means may supply oxygen-dissolved water which is obtained by dissolving oxygen into water. By supplying oxygen-dissolved water or, in particular, the oxygen-dissolved water having a higher oxygen concentration close to saturation, that is 15ppm or more, and mixing the water with Fe²⁺, oxygen comes into contact with the periphery of Fe²⁺ particles with high efficiency, and Fe²⁺ can be more rapidly oxidized to generate Fe³⁺. More preferably, the oxygen concentration may be 20ppm or more, which enables Fe²⁺ in water to be oxidized into the form of Fe³⁺ more reliably. It is also possible to reduce the voltage required for electrolysis of the electrodes because oxygen dissolved into water increases electric conductivity of the water.

The oxygen concentration less than 15ppm is not sufficient to generate Fe³⁺. Although oxygen can be directly blown against Fe²⁺ using a compressor, for example (called bubbling), direct blowing only causes weak oxidization because the oxygen amount dissolved into water by this method is less than 15ppm. Therefore, a large amount of oxygen is required for complete oxidization of Fe²⁺.

According to the present invention, the electrodes used in the apparatus for producing coagulant are plates having surfaces which may be arranged in parallel to the flowing direction of the oxygen-dissolved water. By this structure, the oxygen-dissolved water flowing in parallel to the surfaces of the electrode plates can make contact with the electrodes for a longer time, thereby enabling oxygen in the oxygen-dissolved water to come into contact with iron eluted from the electrodes with high efficiency to generate Fe³⁺.

The apparatus may further have the structure in which the oxygen-dissolved water is supplied from the bottom of the electrodes. By this structure, as the oxygen-dissolved water, which is lighter than water because of the oxygen content, comes up while making contact with the electrodes, oxygen in the oxygen-dissolved water is exposed to iron eluted from the electrodes with higher efficiency.

Preferably, the apparatus for producing coagulant of the present invention may comprise a detecting means for detecting Fe³⁺ concentration on the downstream side of the electrodes and a control means for controlling, on the basis of the detected Fe³⁺ concentration, the amount of the oxygen-dissolved water to be supplied, the oxygen concentration of the oxygen-dissolved water, the voltage applied between the electrodes, or the amount of the oxygen-dissolved water to flow between the electrodes. The amounts of Fe²⁺ and Fe³⁺ generated from the iron electrodes have a relation to the electric conductivity of raw water supplied to the apparatus for producing coagulant (the amount of impurities contained in the raw water) and vary depending on where the apparatus is installed. However, the amount of oxygen to make contact with the electrodes and the amount of iron eluted from the electrodes can be controlled according to the amount of Fe³⁺ generated on the downstream side of the electrodes (Fe³⁺ concentration), thereby efficiently obtaining Fe³⁺.

It is preferable that the control means controls the amounts to maximize the Fe³⁺ concentration. By detecting the optimum conditions where the Fe³⁺ concentration becomes maximum and controlling to maintain the conditions, Fe³⁺ can be more efficiently obtained.

A water treatment apparatus of the present invention has a coagulation tank which is connected to the apparatus for producing coagulant as described above and coagulates impurities contained in water to be treated by exposing the coagulant obtained by the apparatus for producing coagulant to the impurities to form flocs. When forming flocs with the coagulant obtained by the apparatus for producing coagulant of the present invention, as the coagulant is colorless and harmless Fe³⁺, the environment is unaffected if the coagulant is discharged with the treated water without being consumed for coagulation.

Preferably, the water treatment apparatus of the present invention may further comprise a detecting means for detecting the generation speed of the flocs on the downstream side of the coagulant and a control means for controlling, based on the detected generation speed, the amount of the oxygen-dissolved water to be supplied, the oxygen concentration of the oxygen-dissolved water, the voltage applied between the electrodes, or the amount of the oxygen-dissolved water to flow between the electrodes. The amount of Fe³⁺ supplied from the apparatus for producing coagulant has a relation to the electric conductivity of raw water supplied to the apparatus for producing coagulant and varies depending on where the apparatus for producing coagulant is installed. However, the amount of oxygen to make contact with the electrodes and the amount of iron eluted from the electrodes can be controlled according to the generation speed of the flocs, thereby efficiently obtaining Fe³⁺ to form flocs.

### BRIEF DESCRIPTION OF THE DRAWINGS

Fig. 1 is a schematic diagram showing an apparatus for producing coagulant according to an embodiment of the present invention; and
Fig. 2 illustrates the structure of an iron ion reaction tank shown in Fig. 1 wherein (a) is an inside plan view and (b) is an inside side view.

### BEST MODE FOR CARRYING OUT THE INVENTION

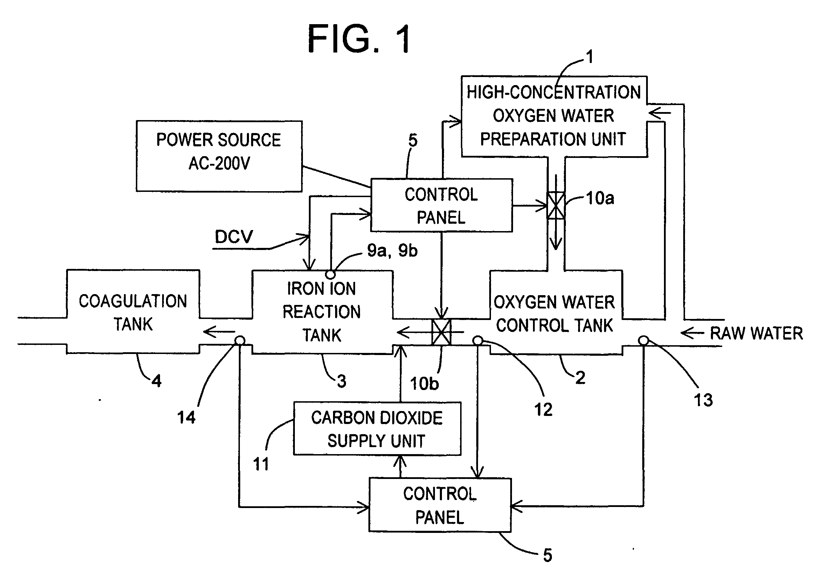

Fig. 1 is a schematic diagram showing an apparatus for producing coagulant according to an embodiment of the present invention.

An apparatus for producing coagulant according to an embodiment of the present invention comprises: a high-concentration oxygen water preparation unit 1 for producing oxygen-dissolved water wherein a high-concentration oxygen is dissolved in water, an oxygen water control tank 2 for controlling an oxygen concentration by mixing the prepared oxygen-dissolved water with raw water as water to be treated, an iron ion reaction tank 3 for eluting iron ions from iron electrodes by electrolysis and exposing the iron ions to oxygen in the oxygen-dissolved water to obtain coagulant, and a control panel 5 as a control means for controlling an amount of electricity to be applied to the high-concentration oxygen water preparation unit 1 and the iron electrodes. The apparatus for producing coagulant of the present invention is connected to a coagulation tank 4 for coagulating impurities in water by the coagulant prepared, thereby constituting a water treatment apparatus.

The high-concentration oxygen water preparation unit 1 is a unit for preparing oxygen-dissolved water by dissolving oxygen supplied from an oxygen supply means such as an oxygen tank and an oxygen preparation apparatus (both not shown in the drawing) in a form of fine bubbles having a diameter of 0.01 to 0.05mm into water taken from raw water. As oxygen formed in fine bubbles has improved dissolution efficiency in water, the high-concentration oxygen water preparation unit 1 provides oxygen-dissolved water having an oxygen concentration of 20 to 50ppm, which is much higher than a normal value of oxygen dissolved in water, that is, 10 to 15ppm.

The oxygen water control tank 2 is a tank for controlling an oxygen concentration by mixing oxygen-dissolved water prepared by the high-concentration oxygen water preparation unit 1 with raw water. The oxygen-dissolved water in which the oxygen concentration has been controlled by the oxygen water control tank 2 is supplied to the iron ion reaction tank 3 of the next stage.

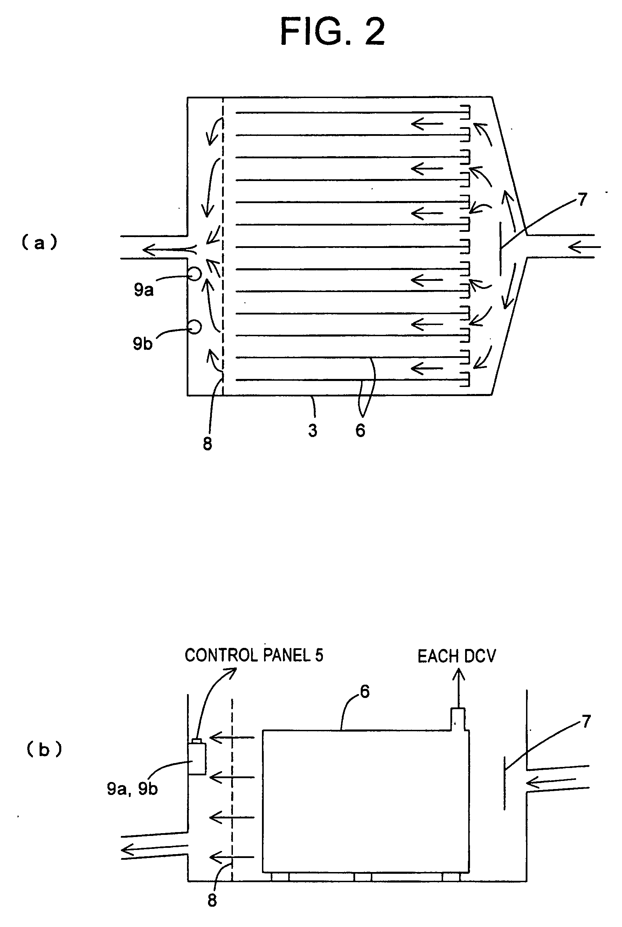

Fig. 2 illustrates the structure of an iron ion reaction tank shown in Fig. 1 wherein (a) is an inside plan view and (b) is an inside side view.

As shown in Fig. 2, the iron ion reaction tank 3 is provided with a plurality of electrode plates 6, as plate-type electrodes made of iron (Fe), being arranged in a row in a direction perpendicular to the flowing direction of the oxygen-dissolved water. The electrode plates 6 are punched plates with holes uniformly formed on the whole area. Each surface of the electrode plates 6 is parallel to the flowing direction of the oxygen-dissolved water. The interval between the adjacent electrode plates 6 is 10mm. A direct current voltage (DCV) is applied to each of the electrode plates 6 so that each plate has the opposite polarity of that of the next plate.

Provided in front of the electrode plates 6 in the flowing direction of the oxygen-dissolved water is an adjusting plate 7 for introducing the oxygen-dissolved water from the oxygen water control tank 2 into the areas between the electrode plates 16 evenly. Provided on the rear side of the electrode plates 6 in the flowing direction of the oxygen-dissolved water is a punched plate 8 having holes uniformly formed on the whole area. Provided on the downstream side of the electrode plates 6 are an iron ion concentration sensor 9a for detecting the Fe³⁺ concentration in the water and an oxygen concentration sensor 9b for detecting the oxygen concentration in the water.

Based on the Fe³⁺ concentration detected by the iron ion concentration sensor 9a, the control panel 5 controls the amount of the oxygen-dissolved water to be supplied from the high-concentration oxygen water preparation unit 1 to the oxygen water control tank 2, the oxygen concentration of the oxygen-dissolved water produced by the high-concentration oxygen water preparation unit 1, the amount of the direct current voltage (DCV) applied between the electrode plates 6, and the amount of the oxygen-dissolved water to flow between the electrode plates 6. For supplying a stable current between the electrode plates 6, the direct voltage applied between the electrode plates 6 is supplied by a voltage/current control method in which an alternating voltage is converted to a direct voltage.

The amount of the oxygen-dissolved water supplied from the high-concentration oxygen water preparation unit 1 to the oxygen water control tank 2 is adjusted by controlling the opening degree of a solenoid operated valve 10a which is disposed between the high-concentration oxygen water preparation unit 1 and the oxygen water control tank 2. The oxygen concentration of the oxygen-dissolved water produced by the high-concentration oxygen water preparation unit 1 is adjusted by controlling the amount of oxygen supplied to the high-concentration oxygen water preparation unit 1 and the amount of raw water supplied on the basis of the oxygen concentration detected by the oxygen concentration sensor 9b. The amount of the oxygen-dissolved water supplied between the electrode plates 6 is adjusted by controlling the opening degree of a solenoid operated valve 10b which is disposed between the oxygen water control tank 2 and the iron ion reaction tank 3.

In the apparatus for producing coagulant having the above-described structure, the oxygen-dissolved water having an oxygen concentration from 20 to 50ppm prepared by the high-concentration oxygen water preparation unit 1 is mixed with the raw water in the oxygen water control tank 2 and, after adjustment of the oxygen concentration, flows into the iron ion reaction tank 3. The oxygen-dissolved water in the iron ion reaction tank 3 is further fed into the areas between the electrode plates 6 uniformly by the adjusting plate 7.

While the above operation is being conducted, in the iron ion reaction tank 3, Fe is eluted from the electrode plates 6 by the voltage applied to the electrode plates 6 to generate Fe²⁺ and Fe³⁺. Here, by supplying the oxygen-dissolved water having an oxygen concentration from 20 to 50ppm in which oxygen is dissolved at a high concentration from the oxygen water control tank 2, Fe²⁺ is completely oxidized at a high speed into the form of more stable Fe³⁺.

In the illustrated drawing, the oxygen-dissolved water is supplied from the side of the electrode plates 6. It is also possible to supply the oxygen-dissolved water from the bottom or the gravitational side of the electrode plates 6. In this case, as the oxygen-dissolved water, which is lighter than water because of oxygen content, comes up while making contact with the electrode plates 6, oxygen in the oxygen-dissolved water can come into contact with iron eluted from the electrode plates 6 with higher efficiency to oxidize the iron.

It is also possible to connect a carbon dioxide supply unit 11, which adjusts the amount of carbon dioxide (CO₂) to be supplied, thereby adjusting a hydrogen ion concentration exponent (pH), before the iron ion reaction tank 3. In this structure, a pH sensor 12 for detecting a pH is provided in the iron ion reaction tank 3. Based on the value (pH) detected by the pH sensor 12, the carbon dioxide supply unit 11 is controlled by the control panel 5 to automatically adjust the amount of carbon dioxide to be supplied so as to adjust the pH of the water to be treated in a range from 5.3 to 6.5. To maintain the pH of the water to be treated in a range from 5.3 to 6.5 by supplying carbon dioxide in this manner enables most efficient coagulation by Fe³⁺. The pH value can also be adjusted by a structure supplying hydrochloric acid, sulfuric acid, or the like, instead of providing the carbon dioxide supply unit 11.

The Fe³⁺-containing oxygen-dissolved water obtained as above flows into the coagulation tank 4, where impurities in the water are coagulated to form flocs. Thus, impurities contained in the raw water can be coagulated and removed with Fe³⁺ as coagulant. Fe³⁺, which is stable, hardly colors the raw water as the water to be treated. Furthermore, as iron does not adversely affect the human body, it is harmless if discharged without being consumed for coagulation, and does not affect the environment.

According to the apparatus for producing coagulant in this embodiment, it is also possible that, based on the Fe³⁺ concentration on the downstream side of the electrode plates 6, the control panel 5 controls the amount of the oxygen-dissolved water to be supplied, the oxygen concentration of the oxygen-dissolved water, the amount of electricity applied between the electrodes, or the amount of water to flow between the electrodes, so that the Fe³⁺ concentration becomes maximum and further is maintained at the same level, thereby obtaining Fe³⁺ with high efficiency.

It is also possible to further provide electric conductivity sensors (for example, EC meters) 13, 14 for detecting the electric conductivity of raw water in the introducing port for the raw water and on the downstream side of the iron ion reaction tank 3, respectively, to allow for control via the control panel 5 depending on the difference between the values detected by the electric conductivity sensor 13 and 14. By this structure, the amount of Fe³⁺ generation can be controlled with higher efficiency. On the other hand, on the downstream side of the coagulation tank 4, a means for detecting a generation speed of flocs may be provided. Based on the generation speed of flocs detected, that is, the coagulation speed, the amount of the oxygen-dissolved water to be supplied, the oxygen concentration of the oxygen-dissolved water, the amount of electricity applied between the electrodes, or the amount of water to flow between the electrodes is controlled, and the obtained Fe³⁺ is supplied into the coagulation tank 4. By this structure, flocs can be efficiently formed to purify the water. Although the two control panels 5 are shown in Fig. 2 as a matter of convenience, each control operation is conducted by the single control 5 in practice.

In addition, by using Fe, which is abundantly found in nature and cheap, production cost and running cost for the apparatus can be lowered. Moreover, as the electric conductivity of water is raised by dissolving oxygen into water, less voltage is required for coagulation. Therefore, it is possible to use a solar battery as a power source, which makes the apparatus for producing coagulant using oxygen-dissolved water described in the embodiment energy-saving.

The above-described embodiment refers to the water treatment apparatus which comprises the high-concentration oxygen water preparation unit 1 for producing oxygen-dissolved water, the iron ion reaction tank 3 for mixing the oxygen-dissolved water with raw water to obtain coagulant, and the coagulation tank 4 for forming flocs, thereby coagulating and removing impurities in the raw water. On the other hand, the coagulation tank 4 may be separately provided independent of the apparatus for producing coagulant. In this structure, water other than the water to be treated, such as pure water, may be used in the coagulation producing process from the high-concentration oxygen water preparation unit 1 to the iron ion reaction 3. By mixing the coagulant with the water to be treated in the coagulation tank 4 separately provided, the same coagulation action can be accomplished as described in the above embodiment.

The following experiment was conducted using the apparatus for producing coagulation according to the above embodiment of the present invention.

As raw water, tap water containing 160ppm of clay comprising reddish soil in Okinawa Prefecture and kaolin was used. 20V, 12A electricity was applied to the electrode plates 6 shown in Fig. 2 for five minutes. The oxygen concentration of the oxygen-dissolved water prepared by the high-concentration oxygen water preparation unit 1 and mixed in the oxygen water control tank 2 was controlled by the control panel 5 to be 40ppm.

In the above process, flocs were formed in the coagulation tank 4 for 20 minutes and left still for 30 minutes. The turbidity of the clear supernatant liquid was 10 degrees or less. The electrode plates 6 were electrolyzed by the oxygen-dissolved water even when the electricity applied to the electrode plates 6 was decreased by 30 - 50%. In this case, 20V, 12A electricity showed approximately 48VA. Therefore, a solar battery can supply sufficient electricity to the electrode plates 6, and the experiment has proven that the apparatus for producing coagulant of the present invention is energy-saving, with the lower power consumption of 50 to 70% compared to the conventional apparatuses.

### INDUSTRIAL APPLICABILITY

As described above, the apparatus for producing coagulant of the present invention is useful for producing coagulant by introducing water to be treated such as water in rivers, lakes, marshes, reservoirs, cistern and the like as well as fresh water, and is applicable in a water purification apparatus for coagulating and separating impurities such as organic and inorganic substances contained in water to be treated by exposing the obtained coagulant to the water to be treated.

## Claims

1. (Amended) An apparatus for producing coagulant by eluting metal ions from electrodes by electrolysis comprising an ionic reaction means, wherein said electrodes are mainly composed of Fe, and said apparatus has an oxidization means for oxidizing Fe²⁺ eluted from said electrodes to generate Fe³⁺ provided before the ionic reaction means.

2. The apparatus for producing coagulant according to claim 1, wherein said oxidization means supplies oxygen-dissolved water which is obtained by dissolving oxygen into water.

3. The apparatus for producing coagulant according to claim 2, wherein said oxygen-dissolved water has an oxygen concentration of 15ppm or more.

4. The apparatus for producing coagulant according to claim 2, wherein said apparatus is further provided with a means for adjusting a hydrogen ion concentration exponent of the oxygen-dissolved water.

5. The apparatus for producing coagulant according to claim 2, wherein each of said electrodes has a form of a plate and surfaces of the electrodes are arranged in parallel to a flowing direction of the oxygen-dissolved water.

6. The apparatus for producing coagulant according to claim 2, wherein said oxygen-dissolved water is supplied from a bottom of the electrodes.

7. The apparatus for producing coagulant according to any one of claims 2 to 6, wherein said apparatus further comprises a detecting means for detecting Fe³⁺ concentration on the downstream side of the electrodes and a control means for controlling, on the basis of the detected Fe³⁺ concentration, an amount of the oxygen-dissolved water to be supplied, an oxygen concentration of the oxygen-dissolved water, a voltage applied between the electrodes, or an amount of the oxygen-dissolved water to flow between the electrodes.

8. The apparatus for producing coagulant according to claim 7, wherein said control means controls the amounts to make the Fe³⁺ concentration maximum.

9. A water treatment apparatus comprising a coagulation tank, wherein said coagulation tank is connected to the apparatus for producing coagulant according to claim 1 for coagulating impurities contained in water to be treated by exposing the coagulant obtained by said apparatus for producing coagulant to the impurities to form flocs.

10. The water treatment apparatus according to claim 9 further comprising a detecting means for detecting a generation speed of said flocs on a downstream side of said coagulation tank and a control means for controlling, on the basis of the detected generation speed, an amount of the oxygen-dissolved water to be supplied, an oxygen concentration of the oxygen-dissolved water, a voltage applied between the electrodes, or an amount of the oxygen-dissolved water to flow between the electrodes.
